Europäisches Patentamt

European Patent Office

Office européen des brevets

(11) Veröffentlichungsnummer: **0 236 993**
**A2**

## (12) EUROPÄISCHE PATENTANMELDUNG

(21) Anmeldenummer: 87103283.5

(22) Anmeldetag: 07.03.87

(51) Int. Cl.⁴: **B01J 39/04 , C01B 21/14**

(30) Priorität: 11.03.86 DE 3607998

(43) Veröffentlichungstag der Anmeldung:
**16.09.87 Patentblatt 87/38**

(84) Benannte Vertragsstaaten:
**BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Fuchs, Hugo, Dr.**
**Egellstrasse 28**
**D-6700 Ludwigshafen(DE)**
Erfinder: **Thomas, Erwin**
**Borngasse 12**
**D-6713 Freinsheim(DE)**
Erfinder: **Weiss, Franz-Josef, Dr.**
**Schilfweg 1**
**D-6708 Neuhofen(DE)**
Erfinder: **Ritz, Josef, Dr.**
**Osloer Weg 8**
**D-6700 Ludwigshafen(DE)**

(54) Verfahren zur Aufarbeitung von Hydroxylamin und dessen Salze enthaltenden Abwässern.

(57) Verfahren zur Aufarbeitung von Hydroxylamin oder dessen Salze enthaltenden Abwässern, dadurch gekennzeichnet, daß man Hydroxylamin oder dessen Salze enthaltende Abwässer über einen stark sauren Ionenaustauscher leitet und anschließend über den stark sauren Ionenaustauscher eine 5 bis 15 gew.%ige wäßrige Schwefelsäure leitet und eine Lösung von Hydroxylammoniumsulfat in wäßriger Schwefelsäure gewinnt.

EP 0 236 993 A2

## Verfahren zur Aufarbeitung von Hydroxylamin oder dessen Salze enthaltenden Abwässern

Bei der Herstellung und Verarbeitung von Hydroxylamin und dessen Salze fallen häufig Abwässer an, die Hydroxylamin und dessen Salze noch in geringen Konzentrationen enthalten. Die Entsorgung solcher Abwässer macht jedoch insofern Schwierigkeiten, als sie die Reinigung von Abwässern in üblichen Kläranlagen stören. Es ist zwar bekannt, daß man Hydroxylamin durch Zusatz von Alkalien, Wasserstoffperoxid oder Nitrit zersetzen kann, wie aus Gmelin, Band Ammonium, Seiten 569 und 572 hervorgeht. Die Zersetzung mit Wasserstoffperoxid ist jedoch aufwendig, während bei der Zersetzung mit Alkalien oder Nitrit andere entsorgungsbedürftige Mittel in das Abwasser eingebracht werden.

Es war deshalb die technische Aufgabe gestellt, behandlungsbedürftige Hydroxylamin oder dessen Salze enthaltende Abwässer so zu behandeln, daß keine Schwierigkeiten bei der Klärung zusammen mit anderen Abwässern auftritt und zudem keine zusätzlichen Chemikalien eingebracht werden müssen.

Diese Aufgabe wird gelöst in einem Verfahren zur Aufarbeitung von Hydroxylamin und dessen Salze enthaltenden Abwässern, wobei man die Hydroxylamin oder dessen Salze enthaltenden Abwässer über einen stark sauren Ionenaustauscher leitet und anschließend über den stark sauren Ionenaustauscher eine 5 bis 15 gew.%ige wäßrige Schwefelsäure leitet und eine Lösung von Hydroxylammoniumsulfat in wäßriger Schwefelsäure gewinnt.

Das neue Verfahren hat den Vorteil, daß auf einfache Weise Hydroxylamin aus den behandlungsbedürftigen Abwässern entfernt wird. Zudem hat das neue Verfahren den Vorteil, daß keine zusätzlichen Chemikalien in die behandlungsbedürftigen Abwässer eingebracht werden. Ferner hat das neue Verfahren den Vorteil, daß Hydroxylamin in Form von Hydroxylammoniumsulfat in wiederverwendbarer Form zurückgewonnen wird.

In der Regel geht man von Abwässern aus, die 0,1 bis 10 g Hydroxylamin je Liter in Form von freiem Hydroxylamin oder dessen Salze wie Sulfat, Nitrat oder Phosphat oder niederen Fettsäuren enthalten. Daneben können noch Ammoniumsalze der genannten Säuren enthalten sein. Besondere Bedeutung hat das Verfahren erlangt zur Behandlung von Abwässern die bei der Herstellung von Hydroxylammoniumsulfat, Nitrat oder Phosphat durch Reduktion von Stickstoffmonoxid oder Salpetersäure in Gegenwart von Edelmetallkatalysatoren anfallen. Ein typisches Abwasser das beispielsweise bei der Herstellung von Hydroxylammoniumsulfat anfällt, enthält 0,5 bis 5 g Hydroxylamin je Liter in Form von Hydroxylammoniumsulfat sowie 0,1 bis 2 g/L Ammoniumsulfat.

Die behandlungsbedürftigen Abwässer werden über stark saure Ionenaustauscher geleitet. Geeignete stark saure Ionenaustauscher enthalten z.B. Sulfonsäuregruppen. Besonders vorteilhaft haben sich Ionenaustauscher aus vernetztem Polystyrol mit Sulfonsäuregruppen erwiesen. Die Behandlung wird zweckmäßig bei einer Temperatur von 10 bis 100°C durchgeführt. Hydroxylamin wird hierbei an den Ionenaustauscher gebunden und falls Hydroxylammoniumsalze enthaltende Abwässer verwendet wird als Abwasser eine entsprechende saure Lösung erhalten, die wiederum für Neutralisationszwecke verwendet werden kann.

Sobald die Kapazität des Ionenaustauschers erschöpft ist, was sich am Ausgang leicht durch den Gehalt an Hydroxylammoniumionen nachweisen läßt, wird die Zufuhr von Abwasser unterbrochen und über den stark sauren Ionenaustauscher 5 bis 15 gew.%ige wäßrige Schwefelsäure geleitet. Vorteilhaft wendet man je L sauren Ionenaustauscher 1 bis 10 L mit 5 bis 15 gew.%ger wäßriger Schwefelsäure an. Zweckmäßig wird der Ionenaustauscher anschließend noch mit Wasser gewaschen. Man erhält so eine Lösung von Hydroxylammoniumsulfat in wäßriger Schwefelsäure von z.B. 5 bis 100 g/L die gegebenenfalls zusätzlich Ammoniumsulfat enthält, sofern die verwendeten Abwässer Ammoniumionen enthalten. In der Regel beträgt der Gehalt an Ammoniumsulfat 2 bis 50 g/L. Die so erhaltene Lösung wird vorteilhaft unter Mitverwendung von weiterer Schwefelsäure für die Herstellung von Hydroxylammoniumsulfat durch Hydrieren von Stickstoffmonoxid in Gegenwart von Edelmetallkatalysatoren verwendet. Es ist auch vorteilhaft wenn man die erhaltene Hydroxylammoniumsulfat enthaltende wäßrige Schwefelsäure der durch Hydrieren von Stickstoffmonoxid mit Wasserstoff in Gegenwart von Edelmetallkatalysatoren erhaltenen Hydroxylammoniumsulfatlösung zufügt und gemeinsam weiter verarbeitet z.B. für die Oximierung von Cyclohexanon verwendet.

In einer bevorzugten Ausführungsform werden Ionenaustauscher jeweils in einer Absorptionszone und einer Desorptionszone paarweise angewandt. Sobald in der Absorptionszone die Kapazität der stark sauren Ionenaustauscher erschöpft ist, wird auf die nächste Zone umgeschaltet, während der erschöpfte Ionenaustauscher mit Schwefelsäure zum Entfernen der Hydroxylammoniumionen beaufschlagt wird. Diese Operation wird wechselweise vorgenommen.

Das Verfahren nach der Erfindung sei an folgendem Beispiel veranschaulicht.

Beispiel

Ein Glasrohr vom Durchmesser 50 mm, welches am unteren Ende mit einer Fritte versehen ist, wird bis zu einer Höhe von 1,5 m mit einem Ionenaustauscher aus vernetztem Polystyrol mit Sulfonsäuregruppen gefüllt und mit einer 5 % - (m/m) wäßrigen Schwefelsäure aktiviert.

116 L Abwasser aus der Hydroxylaminherstellung, mit einem Hydroxylamingehalt von 1,45 g/L, einer Schwefelsäurekonzentration von 0,2 g/L sowie einer Ammoniumsulfatkonzentration von 0,5 g/L werden in einer Menge von 2500 mL/h über den Austauscher geleitet. Dabei werden die Hydroxylammonium-sowie die Ammoniumionen am Austauscher gebunden und die Sulfationen in Form von Schwefelsäure als Eluat erhalten.

Durch Behandlung des Ionenaustauschers mit 6.500 mL einer 10 % (m/m) Schwefelsäure und Nachwaschen mit ca. 3000 mL Wasser erhält man 8550 mL einer Hydroxylammoniumsulfatlösung mit 19,45 g Hydroxylamin/l, 48,06 g Schwefelsäure/L sowie 6,7 g Ammoniumsulfat/L. Hierbei wird der Ionenaustauscher gleichzeitig regeneriert. Diese Lösung wird zusammen mit frischer Schwefelsäure bei der Hydroxylaminsynthese eingesetzt.

**Ansprüche**

1. Verfahren zur Aufarbeitung von Hydroxylamin oder dessen Salze enthaltenden Abwässern, dadurch gekennzeichnet, daß man Hydroxylamin oder dessen Salze enthaltende Abwässer über einen stark sauren Ionenaustauscher leitet und anschließend über den stark sauren Ionenaustauscher 5 bis 15 gew.%ige wäßrige Schwefelsäure leitet und eine Lösung von Hydroxylammoniumsulfat in wäßriger Schwefelsäure gewinnt.

2. Verfahren nach Anspruch 1, dadurch gekennzeichnet, daß man von Abwässern ausgeht, die 0,1 bis 10 g Hydroxylamin/L in Form von Hydroxylamin oder dessen Salze enthalten.

3. Verfahren nach den Ansprüchen 1 und 2, dadurch gekennzeichnet , daß man mindestens zwei Ionenaustauscherzonen anwendet die wechselweise mit Abwasser und Schwefelsäure beaufschlagt werden.

4. Verfahren nach den Ansprüchen 1 bis 3, dadurch gekennzeichnet, daß man die erhaltene Hydroxylammoniumsulfat enthaltende wäßrige Schwefelsäure gegebenenfalls unter Zusatz weiterer Schwefelsäure für die Herstellung von Hydroxylammoniumsulfat durch Hydrieren von Stickstoffmonoxid mit Wasserstoff in Gegenwart von Edelmetallkatalysatoren verwendet.

5. Verfahren nach den Ansprüchen 1 bis 3, dadurch gekennzeichnet , daß man die erhaltene Hydroxylammoniumsulfat enthaltende wäßrige Schwefelsäure der durch Hydrieren von Stickstoffmonoxid mit Wasserstoff in Gegenwart von Edelmetallkatalysatoren erhaltenen Hydroxylammoniumsulfatlösung zufügt und gemeinsam weiter verarbeitet.